(19) Europäisches Patentamt / European Patent Office / Office européen des brevets

(11) **EP 2 040 826 B1**

## (12) FASCICULE DE BREVET EUROPEEN

(45) Date de publication et mention
de la délivrance du brevet:
**30.03.2011 Bulletin 2011/13**

(21) Numéro de dépôt: **07823587.6**

(22) Date de dépôt: **16.07.2007**

(51) Int Cl.:
*B01D 61/12* (2006.01)   *B01D 61/14* (2006.01)
*B01D 61/18* (2006.01)   *B01D 61/20* (2006.01)
*B01D 61/22* (2006.01)   *B01D 63/06* (2006.01)
*B01D 65/08* (2006.01)

(86) Numéro de dépôt international:
**PCT/FR2007/051667**

(87) Numéro de publication internationale:
**WO 2008/009848 (24.01.2008 Gazette 2008/04)**

(54) **DISPOSITIF DE FILTRATION TANGENTIELLE**

TANGENTIALFILTRIERVORRICHTUNG

TANGENTIAL FILTRATION DEVICE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.07.2006 FR 0652992**

(43) Date de publication de la demande:
**01.04.2009 Bulletin 2009/14**

(73) Titulaire: **Societé Industrielle de la Vallée de L' Aigues
S.I.V.A.
26110 Nyons (FR)**

(72) Inventeur: **LESCOCHE, Philippe
26110 PIEGON (FR)**

(74) Mandataire: **Sarlin, Laure V.
Cabinet Beau de Loménie
51, avenue Jean-Jaurès
BP 7073
69301 Lyon Cedex 07 (FR)**

(56) Documents cités:
WO-A-2004/067146    FR-A1- 2 810 256
JP-A- 4 371 218    US-A- 4 702 842
US-A- 6 161 435    US-A1- 2004 266 017

**Description**

La présente invention concerne le domaine technique de la séparation moléculaire ou particulaire mettant en oeuvre des éléments de séparation, appelés généralement membranes, adaptés pour assurer la séparation des molécules ou des particules contenues dans un milieu fluide à traiter.

L'objet de l'invention trouve une application particulièrement avantageuse dans le domaine de la filtration au sens général d'un milieu fluide à traiter, et en particulier de la nanofiltration, de l'ultrafiltration, de la microfiltration, etc.

Par milieu fluide à traiter, on entend en particulier un milieu liquide, tel que du lait, du vin, de l'eau, des jus de fruits, le sucre et ses dérivés ...

Dans l'état de la technique, il est connu de nombreuses variantes de réalisation d'une installation de filtration pour un fluide à traiter. Notamment, certaines de ces installations utilisent la filtration tangentielle et incorporent une boucle de circulation. La filtration tangentielle consiste à faire circuler le liquide à traiter parallèlement à une membrane poreuse. De plus, le liquide à traiter circulant à grande vitesse sur la surface de la membrane, une contrainte de cisaillement est générée qui redisperse les matières déposées sur cette surface, limitant ainsi l'accumulation des particules à la surface de la membrane et retardant son colmatage.

Le liquide à traiter « frotte » sur la surface de la membrane, ce qui entraîne la création d'une perte de charge qui varie linéairement en fonction de la longueur de la membrane. Cette perte de charge dépend de paramètres dimensionnels de la membrane : la longueur de la membrane et son diamètre hydraulique ; et de paramètres expérimentaux : la vitesse de circulation, la viscosité du produit, la masse volumique.

Un dispositif de filtration tangentielle comporte au moins un élément de filtration qui comporte une membrane poreuse qui délimite une chambre de circulation pour le fluide à filtrer et une chambre de collecte pour le filtrat ayant traversé la membrane. L'élément de filtration comporte au moins une, et le plus souvent une seule, entrée pour le fluide à traiter, au moins une, et le plus souvent une seule, sortie pour le rétentat ayant circulé le long de l'élément de filtration. Le volume de collecte pour le filtrat communique avec au moins une, et le plus souvent une seule, sortie pour le filtrat. Le filtrat se trouve clarifié, par contre le rétentat correspond à un concentré du fluide à traiter, en particules n'ayant pas pu traverser les pores de l'élément de filtration. La plupart du temps de tels dispositifs incluent une boucle de circulation, c'est-à-dire que le rétentat est réinjecté, au moins en partie, avant l'entrée dans l'élément de filtration, de façon à effectuer des reconcentrations successives et ainsi, éviter des déchets trop importants.

Les membranes sont constituées d'un support dont la surface sur laquelle le liquide à traiter va circuler est recouverte d'une couche de filtration de faible épaisseur. Ces membranes peuvent être de type organique, c'est-à-dire élaborées à partir d'un ou plusieurs polymères organiques, tels que les polysulfones, les polyéthersulfone, les polyamides, les polyfluorures vinyliques. Les membranes peuvent également être de nature inorganique, membranes qui seront préférées dans le cadre de l'invention, et être constituées de couches de céramiques poreuses, par exemple de carbone, de zircone, oxyde d'alumine ou oxyde de titane.

Les membranes peuvent avoir différentes géométries, par exemple plane ou de forme tubulaire. En général, plusieurs membranes sont placées dans un module ou carter.

Un tel dispositif de filtration comporte au moins un module de filtration jouant le rôle d'enveloppe pour une série d'éléments de filtration de forme tubulaire s'étendant parallèlement les uns aux autres, montés de manière étanche à chacune de leurs extrémités sur une plaque de positionnement. Chaque élément de filtration comporte au moins un canal de circulation pour le fluide à filtrer. Les éléments de filtration assurent la filtration tangentielle du fluide, en vue d'obtenir à la surface périphérique des éléments de filtration, la sortie du filtrat destiné à être récupéré dans un volume de collecte situé entre les plaques de positionnement et l'enveloppe.

Selon une première variante de la technique antérieure, le dispositif de filtration est monté à l'intérieur d'une boucle de circulation dans laquelle une pompe de circulation est reliée au dispositif de filtration par l'intermédiaire d'une canalisation d'amenée du fluide à filtrer et d'une canalisation d'alimentation du fluide à traiter dans laquelle débouche une canalisation de retour récupérant une partie du fluide ayant circulé à l'intérieur des éléments de filtration et appelé rétentat. La pompe de circulation permet d'assurer la circulation du fluide à filtrer à grande vitesse à l'intérieur des éléments de filtration tendant à générer une contrainte de cisaillement qui redisperse les matières déposées sur la surface des canaux de la membrane.

D'autres dispositifs de filtration, par exemple décrits dans les demandes de brevet FR 2 810 256 et WO 01/96003, comprennent une boucle de circulation directement intégrée dans le carter.

Un tel dispositif a pour avantage de réduire considérablement le volume captif total du dispositif et particulièrement le volume captif correspondant au liquide à traiter avec pour conséquence immédiate, une réduction du temps de contact à l'intérieur du dispositif. Cette limitation du temps de contact réduit ainsi l'échauffement du liquide à l'intérieur du système.

Quelle que soit la configuration du système, il est nécessaire, dans le cas d'un fonctionnement en tangentiel, que les conditions expérimentales, qui permettent de décolmater, soient respectées durant le cycle de fonctionnement de installation.

Différents documents de l'état de la technique décrivent une boucle de circulation avec un élément de filtration tangentielle comprenant une sonde permettant de mesurer un paramètre qui, une fois comparé à une valeur seuil, permet de mettre en place une procédure de sécurité. Par exemple, le document US 6;161,435 utilise une sonde ultrasonique, le document WO 2004/06 71 46 utilise une sonde pour la viscosité. D'autres systèmes et procédé de filtrage avec une sonde de viscosité ou une sonde déterminant l'épaisseur d'une couche de gel sur la membrane sont respectivement décrits dans le document JP 04 37 12 18 et US 2004/266017.

De nombreuses théories tentent de prédire le flux de perméat d'un dispositif à membranes. L'une d'entre elles définit l'épaisseur de la sous-couche laminaire d'un écoulement turbulent comme étant le paramètre principal. En effet, il semble évident que l'épaisseur des matières déposées sur la surface de la membrane ne puisse dépasser cette de la sous-couche laminaire. Cette dernière représente donc l'épaisseur du gâteau de matières arrêtées. Par conséquent, il est raisonnable d'estimer qu'au plus cette sous-couche aura une épaisseur faible au plus la perméabilité de la membrane sera importante.

La relation qui donne l'épaisseur de la sous-couche laminaire est la suivante :

$$\chi = k \times \frac{\nu}{(\tau_\omega / \rho)^{\frac{1}{2}}}$$

avec :

$\chi$ = épaisseur de la sous-couche laminaire
$\nu$ = viscosité cinématique du liquide à filtrer
$\rho$ = masse volumique du liquide à filtrer
$\tau_\omega$ = contrainte de cisaillement pariétale
$k$ = coefficient

La valeur de la contrainte de cisaillement pariétale est donnée par la relation suivante :

$$\tau_\omega = \frac{\lambda}{8} \times \rho \times V_L^2$$

avec :

$\lambda$ = coefficient de frottement
$v_L$ = vitesse de circulation du liquide à filtrer

La valeur du coefficient de frottement est donnée par la relation suivante :

$$\lambda = 0,316 \times R_e^{-0.25}$$

ou $R_e$ est le nombre de Reynolds du liquide à traiter.

Ce dernier est égal à :

$$R_e = \frac{2 \times \rho \times V_L \times R}{\eta}$$

avec :

R = rayon hydraulique du canal dans lequel circule le liquide à traiter,
$\eta$ = viscosité dynamique du liquide à filtrer

Il apparaît donc que, pour évaluer le décolmatage d'une membrane fonctionnant en régime tangentiel, doivent être prises en compte :

- la vitesse de circulation,
- la masse volumique du liquide à filtrer,
- la viscosité dynamique et la viscosité cinématique (cette dernière étant égale au rapport de la première sur la masse volumique).

Durant le fonctionnement de la membrane, des espèces sont arrêtées et d'autres passent à travers la membrane selon le pouvoir de coupure de cette dernière. Naturellement, la concentration des espèces arrêtées augmente avec pour conséquence les croissances de la viscosité et de la masse volumique du liquide circulant le long de la membrane.

Dans ces conditions :

- le nombre de Reynolds se réduit,
- le coefficient de frottement augmente,
- la perte de charge augmente,
- la contrainte de frottement pariétale devient plus élevée,
- l'épaisseur de la sous-couche laminaire se réduit favorisant l'augmentation de la perméabilité.

L'augmentation de la viscosité et de la masse volumique devrait avoir pour conséquence l'augmentation de la perméabilité. Mais, dans la pratique, le contraire se produit. En effet, cette prédiction de la croissance de la perméabilité avec l'augmentation de la viscosité et de la masse volumique est infirmée par le fonctionnement de la pompe de circulation. Cette dernière, pour des raisons de coût, est très fréquement de type centrifuge. Or, les pompes centrifuges possèdent des courbes de fonctionnement qui définissent la valeur du débit de la pompe quand les conditions de pression varient. En règle générale, si la perte de charge dépendante du frottement du liquide à traiter sur les membranes augmente, le débit de circulation diminue. La vitesse de circulation se trouve donc réduite, avec pour conséquence :

- le nombre de Reynolds qui se réduit,
- le coefficient de frottement qui diminue,

- la perte de charge qui diminue,
- la contrainte de frottement pariétale qui devient plus faible,
- l'épaisseur de la sous-couche laminaire qui augmente réduisant ainsi la perméabilité.

Il convient de noter que la perte de charge n'est pas représentative de l'état du liquide à traiter à intérieur du ou des éléments de filtration car une même perte de charge peut correspondre à une forte vitesse de circulation associée à une faible valeur de la viscosité ou bien l'inverse.

Par ailleurs, la viscosité est le rapport de la contrainte de cisaillement à l'intérieur du liquide (différente de la contrainte de cisaillement pariétale) par le gradient de vitesse. Or, le plus souvent, les liquides à traiter possèdent, dans les niveaux de concentration élevée, des viscosités dites anormales. Cette anormalité a très souvent pour conséquence l'apparition de phénomènes de prise en masse en cas de brutale variation du gradient de vitesse. Cette variation peut être la conséquence d'un arrêt de la tension électrique ou de tout autre problème qui aurait comme effet de réduire accidentellement la vitesse de circulation. Dans ce cas, l'ensemble du liquide, à traiter peut se transformer en un gel et vidanger l'installation devient une opération très longue et donc coûteuse et parfois même impossible sans changement des membranes. La prise en gel du liquide à traiter dans un dispositif de filtration tangentielle à membranes, avec boucle de circulation, est un phénomène qu'il est fondamental d'éviter.

Dans ce contexte, les inventeurs ont donc élaboré un nouveau dispositif tel que défini à la revendication 1, mettant en oeuvre un procédé de contrôle d'une installation de filtration tangentielle d'un fluide à traiter comprenant au moins un élément de filtration, le long duquel circule un fluide à filtrer destiné à être réparti en un filtrat ayant traversé l'élément de filtration et en un rétentat, ayant circulé le long de l'élément de filtration, ledit élément étant incorporé dans une boucle de circulation, de sorte qu'au moins une partie du rétentat est réinjectée dans le fluide à traiter avant l'entrée dans l'élément de filtration. Selon une caractéristique essentielle de l'invention, au moins une information caractéristique du fluide à filtrer, représentative des risques de gélification du liquide à traiter au sein du ou des éléments de filtration et/ou des risques de colmatage total du ou des éléments de filtration, est détectée. Dans le cadre du dispositif selon l'invention, les risques de gélification du fluide à filtrer au sein du ou des éléments de filtration, et/ou le colmatage total du ou des éléments de filtration sont minimisés, voire totalement évités, par la détection d'une information caractéristique du fluide à filtrer et sa comparaison avec une valeur seuil.

Le dispositif de filtration d'un fluide à traiter en mode tangentiel selon linvention, comprend au moins un élément de filtration qui comporte au moins une entrée pour un fluide à filtrer, au moins un volume de collecte relié à une sortie pour le filtrat ayant traversé l'élément de filtration et au moins une sortie pour le rétentat ayant circulé le long de l'élément de filtration, ledit élément étant incorporé dans une boucle de circulation, de sorte qu'au moins une partie du rétentat est réinfectée dans le fluide à traiter avant l'entrée dans l'élément de filtration. Selon une caractéristique essentielle de l'invention, ce dispositif comprend au moins une sonde de détection d'une information caractéristique du fluide à filtrer et représentative des risques de gélification du liquide à filtrer au sein du ou des éléments de filtration et/ou de colmatage total du ou des éléments de filtration. Ce dispositif incorpore donc une sonde de détection d'une information caractéristique du fluide à filtrer, qui permet par comparaison avec une valeur de référence d'évaluer les risques de gélification du fluide à filtrer au sein du ou des éléments de filtration et/ou de colmatage total du ou des éléments de filtration et de prévoir, en fonction du résultat de la comparaison, de mettre en place ou non une procédure d'urgence ou de sécurité.

La description qui va suivre, en référence aux figures annexées, permet de mieux comprendre l'invention.

Les **Figures 1A, 1B** et **1C** sont des représentations schématiques de dispositifs de filtration tangentielle connus de l'art antérieur dans lesquels une sonde de détection a été ajoutée.

La **Figure 2** est une représentation schématique d'un dispositif de filtration tangentielle conforme à l'invention.

Les **Figures 3B** et **3C** sont des vues en coupe de dispositifs de type TIS conformes à l'invention et la **Figure 3A** est une vue en coupe d'un dispositif conforme à WO 01/96003.

Les **Figures 4** à **7** représentent l'évolution de la perméabilité d'un dispositif de type TIS fonctionnant en mode tangentiel, en fonction du signal donné par une sonde intégrée au dispositif conformément à l'invention.

Dans le cadre de l'invention, pour permettre à un système comportant des membranes d'éviter de fonctionner dans des conditions où la perméabilité est faible et/ou le risque de prise en gel du liquide à filtrer est manifeste, est intégrée au sein de la boucle de circulation, une sonde qui donne une information dépendante et représentative d'une des caractéristiques du fluide à filtrer, cette information étant caractéristique de l'épaisseur de la couche laminaire présente en surface du ou des éléments de filtration. L'information détectée est également directement reliée au flux de perméat qui traverse l'élément de filtration. Cette information est régulièrement détectée au cours de l'opération de filtration. Comme vu précédemment, de telles caractéristiques sont, notamment :

- la vitesse de circulation du fluide à filtrer,

- la concentration du fluide à filtrer,
- la viscosité du fluide à filtrer, et
- la masse volumique du fluide à filtrer.

Le fluide à filtrer étant, dès les premiers cycles de filtration constitué d'un mélange de fluide à traiter et de rétentat, on constate normalement à chaque cycle de filtration une augmentation de la viscosité et de la masse volumique du fluide à filtrer qui circule au sein des éléments de filtration. L'information détecté peut être obtenue à partir d'une mesure réalisée sur le rétentat, ou de préférence, sur le fluide à filtrer.

L'information donnée par la sonde peut être une mesure exacte de l'une ou l'autre de ces caractéristiques ou correspondre à une information qui rend compte de l'une ou l'autre de ces caractéristiques. En effet, la mesure réalisée peut être convertie en tout type de signal et l'information délivrée peut soit correspondre à la mesure, soit être obtenue à partir de la mesure, une même information pouvant alors correspondre à une gamme de mesures.

Il est difficile de mesurer la viscosité du fluide à filtrer. En effet, durant son fonctionnement, le gradient de vitesse le long d'une membrane atteint des valeurs très élevées : de l'ordre de 10 000 s-1. Or, c'est de cette manière que les viscosimètres déterminent la viscosité d'un liquide. La valeur très élevée du gradient de vitesse n'étant pas mesurable par des viscosimètres classiques, il est très difficile de déterminer la valeur de la viscosité du fluide à filtrer, au niveau des éléments de filtration.

En ce qui concerne la concentration, cette caractéristique est très dépendante du fluide à filtrer et il est donc très difficile de prévoir une valeur seuil adaptée à une série de fluides de nature différente. En effet, dans le cadre de l'invention, par concentration, on entend le rapport entre tout le volume de fluide traité durant un cycle de fonctionnement et le volume du concentrat en fin d'opération.

Ainsi un liquide peut être concentré x fois à partir de son état initial. La concentration qui peut être atteinte dépend de la teneur initiale en matière du fluide à traiter. Par exemple, un vin peut contenir y mg/l de matières à séparer pour obtenir une bonne turbidité. Si l'expérience antérieure a montré qu'à partir de y mg/l, on peut concentrer 1000 fois, cela signifie que pour une cuve de 1000 hl, le volume final doit être de 100 l. Si la cuve suivante comporte (y+10) mg/l, la même concentration peut faire apparaître des phénomènes de prise en masse. En raison de cette variabilité de la teneur initiale en matière d'un fluide à l'autre, la valeur seuil devra être réajustée pour chaque type de fluide.

La concentration peut, par exemple, être déterminée à partir de deux débitmètres permettant de mesurer le flux de fluide entrant dans l'installation et le flux de perméat sortant, en effectuant le rapport entre les deux flux.

Dans le cadre de l'invention, de façon préférée, la sonde détecte une information caractéristique de la masse volumique ou de la vitesse du fluide à filtrer.

Selon une variante de l'invention, il est possible d'utiliser au moins deux sondes différentes, chacune donnant une mesure caractéristique des risques de gélification du liquide à filtrer au sein du ou des éléments de filtration et/ou de colmatage total du ou des éléments de filtration. Il est également possible, de détecter, en plus d'une ou plusieurs informations caractéristiques du fluide à filtrer, représentative des risques de gélification et/ou de colmatage, une autre caractéristique du fluide à filtrer ou du dispositif de filtration. Par exemple, il est possible d'utiliser, en plus d'une sonde conforme à l'invention, une sonde mesurant par exemple, la perte de charge. Ainsi, des capteurs de pression situés en amont et en aval des éléments de filtration permettent de mesurer la perte de charge et cette information pourra être utilisée pour caractériser l'installation, en corrélation avec notamment la vitesse de circulation ou la masse volumique du fluide à traiter.

La vitesse de circulation peut être mesurée par de nombreux types de sondes. Un premier type de sonde mesure le débit de fluide à filtrer, en un point du dispositif, par exemple, en sortie de la pompe de circulation et recalcule la vitesse en divisant par la section des membranes. Cette méthode suppose des débitmètres de fort débit (celui de la pompe de circulation) donc onéreux. Un autre type de sonde consiste en un système émetteur/récepteur d'ondes ultrasonores qui à partir, par exemple, de l'effet LARSEN recalcule la vitesse. Ces sondes sont beaucoup moins onéreuses que les premières, mais ne déterminent la vitesse qu'à l'endroit où elles sont disposées. Par conséquent, elles ne permettent pas de déterminer la vitesse de circulation au sein des membranes, ce qui peut être intéressant dans certains cas. Dans une version encore moins onéreuse, la sonde peut délivrer des informations qui correspondent à des gammes de mesures et non pas à une mesure précise. C'est, par exemple, le cas de sondes ultrasoniques avec une série de diodes, chaque nombre de diodes éclairées correspondant à une gamme de débits.

De préférence, on utilisera une sonde ultrasonique. La sonde utilisée peut traduire la mesure de la vitesse ou le débit détecté en tout type de signal, électrique, lumineux notamment.

La masse volumique peut également être mesurée par de nombreux types de sondes. Un type de sonde consiste en un système émetteur/récepteur d'ondes ultrasonores. La sonde peut fournir des mesures exactes ou bien délivrer des informations qui sont obtenues à partir du signal mesuré, une même information pouvant correspondre à une gamme de mesures.

Dans tous les cas de sondes utilisées, l'important est que les informations délivrées par la sonde soient représentatives de la caractéristique du liquide à filtrer sélectionnée, et en particulier, de la masse volumique ou de la vitesse de circulation du fluide à filtrer.

Dans le cadre de l'invention, il peut être prévu de comparer l'information fournie par la sonde à une valeur seuil, le résultat de la comparaison conditionnant le déclenchement ou non d'une procédure de sécurité. Cette procédure de sécurité peut, par exemple, être un arrêt du dispositif, sa vidange ou bien un rinçage rapide à l'eau. Dans ce cas, le dispositif comprend des moyens de déclenchement de la procédure d'urgence qui seront actionnés en fonction de l'information détectée par la sonde, et de son positionnement par rapport au seuil d'alerte.

La valeur seuil sera déterminée au préalable, par exemple expérimentalement en réalisant plusieurs cycles de filtrations avec différents fluides à traiter devant être filtrés sur l'installation. On déterminera, par exemple, pour chaque test, la valeur de la caractéristique mesurée qui correspond, par exemple, à une baisse du flux de perméat et on choisira la valeur seuil pour se situer dans tous les tests, dans le temps, avant cette baisse de flux, avec une certaine marge de sécurité. Il est également possible, pour une même installation de déterminer plusieurs valeurs seuils, chacune étant adaptée à un type de perméat, par exemple vin rosé de la cave X, vin rosé de la cave Y, vin rouge de la cave X, vin rouge de la cave Y...

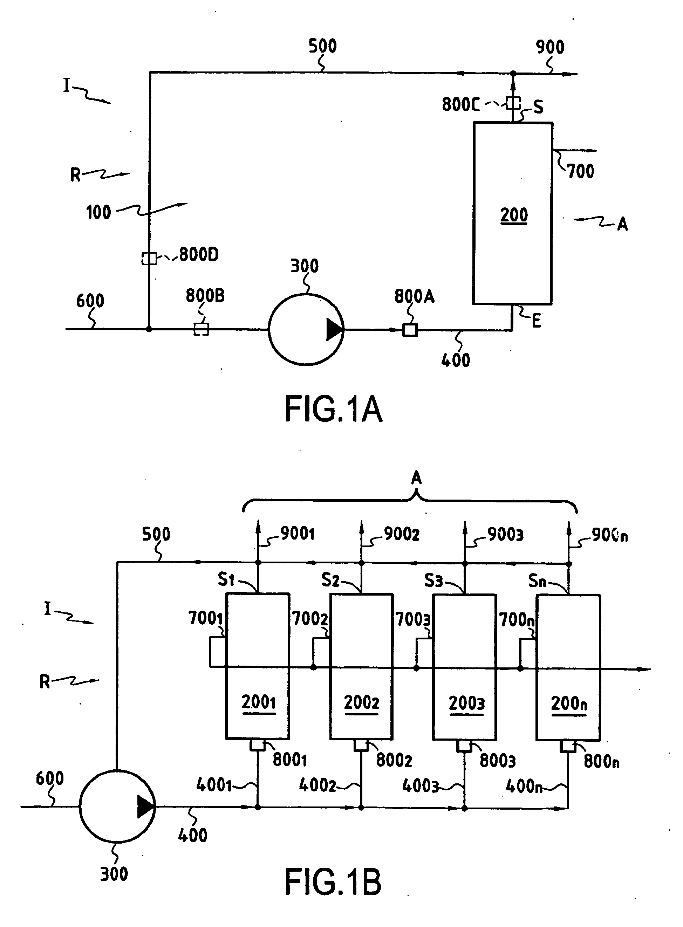

La ou les sondes doivent être placées dans le dispositif, au sein de la boucle de circulation, afin de permettre de détecter l'information souhaitée concernant le fluide à filtrer qui va circuler dans le ou les éléments de filtration. La boucle de circulation est équipée d'une pompe de circulation assurant la circulation du fluide au sein de la boucle. Pour faciliter la compréhension de l'invention décrite ultérieurement, la **Figure 1A** montre un dispositif de filtration **I** comprenant une boucle de circulation **100** dans laquelle un module de filtration tangentielle **200,** qui comporte plusieurs éléments de filtration, est intégré. Une pompe de circulation **300** est positionnée à l'extérieur du module et assure la circulation du fluide à l'intérieur du dispositif. Cette pompe **300** est reliée au module de filtration **200** par l'intermédiaire d'une canalisation **400** d'amenée du fluide à filtrer et d'une canalisation de retour **500** récupérant une partie du rétentat ayant circulé à l'intérieur des éléments de filtration. Le module **200** correspond à un circuit aller **A** de la boucle et la canalisation **500** à un circuit retour **R.** Le reste du rétentat est éliminé par une sortie d'évacuation **900,** située en amont du module de filtration. Le fluide à traiter arrive à la pompe **300,** par l'intermédiaire d'une canalisation d'alimentation **600.** La canalisation de retour **500** du rétentat débouche, en amont de la pompe, dans la canalisation d'alimentation **600.** Par conséquent, dès les premiers cycles de filtrations le fluide à filtrer qui circule dans le module de filtration tangentielle contient, en mélange, le fluide à traiter et du rétentat. Le module de filtration peut être tout type de module de filtration de l'art antérieur, par exemple un carter comprenant plusieurs éléments de filtration, telles que des membranes tubulaires de filtration dans lesquelles le fluide à filtrer circule tangentiellement. Chaque élément de filtration comporte au moins un canal réalisé parallèlement à l'axe longitudinal de l'élément de filtration. La surface des canaux est recouverte par au moins une couche séparatrice non représentée, destinée à être en contact avec le milieu fluide à traiter circulant à l'intérieur des canaux. La nature de la ou des couches séparatrices est choisie en fonction du pouvoir de séparation ou de filtration à obtenir. Le filtrat sortant de la surface périphérique des éléments de filtration est récupéré dans un volume de collecte.

Le module de filtration comporte :

- une entrée **E** pour le fluide à filtrer, reliée à la canalisation **400** d'amenée du fluide à filtrer,
- une sortie **S** d'évacuation du rétentat, reliée à la canalisation de retour **500** récupérant une partie du rétentat ayant circulé à l'intérieur des éléments de filtration, et
- une sortie **700** pour le filtrat.

Chaque élément de filtration est relié, au sein du module, à l'entrée **E** pour le fluide à filtrer, à la sortie **S** pour le rétentat et le volume de collecte du filtrat ayant traversé chaque éléments de filtration à la sortie **700** par le filtrat.

La ou les sondes de détection sont, avantageusement, positionnées de manière à mesurer une caractéristique du fluide à filtrer qui va circuler au sein des éléments de filtration contenus dans le module **200.** Pour cela, dans l'exemple illustré **Figure 1A,** il est possible de positionner la sonde sur la canalisation **400** d'amenée du fluide à filtrer, en aval de la pompe **300,** comme représenté sous la référence **800A.** La sonde peut également être positionnée sur la canalisation d'alimentation **600,** en amont de la pompe **300** et en aval de l'arrivée du rétentat par la canalisation **500,** comme illustré selon la référence **800B** à la, **Figure 1A.**

Il pourrait également être envisagé de détecter une caractéristique du rétentat destiné à être réinjedé dans le fluide à traiter. En effet, le rétentat étant la « partie variable » du fluide à filtrer, l'autre partie constituée par le fluide à traiter étant la « partie constante », la mesure d'une caractéristique du rétentat, telles que la vitesse de circulation du rétentat ou sa masse volumique est directement reliée à la caractéristique correspondante du fluide à filtrer et est représentative de ses variations. Il pourrait dont être envisagé de positionner la sonde sur la canalisation de retour **500** du rétentat. Dans une première variante comme illustré selon la référence **800C** à la **Figure 1A,** la sonde peut être positionnée en aval de la sortie **S** et en amont de la sortie d'évacuation **900** d'une partie du rétentat. Une autre variante consiste à positionner la sonde sur la canalisation de retour **500** en aval de la sortie d'évacuation **900** comme illustré selon la référence **800D** à la **Figure 1A.** La première de ces variantes sera préférée, notamment, lorsque la sonde détecte une information dépendante de la vitesse du fluide à traiter.

Quelle que soit la position choisie pour la sonde, à savoir **800A, 800B, 800C** ou **800D,** l'information délivrée par la sonde rend compte des risques de gélification du fluide à filtrer au sein des éléments de filtration présents au sein du module et/ou des risques de colmatage total desdits éléments de filtration. Les risques sont évalués d'une manière globale pour l'ensemble du module et non pour chaque élément de filtration individuellement.

Il est également possible que le dispositif **I** comprenne plusieurs modules **200₁** à **200ₙ** de filtration qui correspondent au circuit aller **A** de la boucle comme illustré sur la **Figure 1B**. Sur la **Figure 1B,** pour chaque module, les références des sorties **S** (sortie pour le rétentat), **700** (sortie pour le filtrat) et **900** (sortie d'évacuation d'une partie du rétentat), sont affectés de l'indice correspondant à chacun des modules. Dans le cas de plusieurs modules disposés en parallèle, la canalisation **400** d'amenée du fluide à filtrer présente plusieurs embranchements **400₁** à **400ₙ,** chacun relié au module de filtration correspondant. Il peut alors être prévu de ne positionner qu'une sonde sur la canalisation **400** en amont des différents embranchements. Dans ce cas, information détectée est globale et est représentative des risques de gélification et de colmatage de l'ensemble des modules et donc de l'ensemble des éléments de filtration et non de chaque module ou de chaque élément de filtration. Une sonde **(800₁** à **800ₙ)** peut aussi être positionnée, sur chaque embranchement **400₁** à **400ₙ,** comme illustré **Figure 1B.** En sortie de chaque module, une partie du rétentat est évacué par une sortie **900₁** à **900ₙ,** le reste étant regroupé et réinjecté par la canalisation **500** de retour du rétentat (correspondant au circuit retour **R)** pour subir une nouvelle opération de filtration en mélange avec du fluide à traiter alimenté par la canalisation **600**. Selon une variante non représentée, une sonde pourrait également être positionnée, pour chaque module n sur la canalisation de retour du rétentat, entre la sortie **Sₙ** et la sortie **900ₙ** d'évacuation d'une partie du rétentat. Ces deux configurations ont l'avantage de réaliser la mesure pour chaque module, ce qui permet d'appliquer une valeur seuil à chacun des modules qui peuvent être contrôlés indépendamment et, augmenter ainsi le niveau de sécurité de l'installation.

Le procédé selon l'invention est particulièrement adapté pour contrôler des dispositifs pour lesquels :

- la boucle de circulation est comprise à l'intérieur du carter,
- la pompe de circulation et son moteur sont disposés dans le prolongement du carter permettant ainsi d'obtenir un ensemble homogène sans que les tuyauteries correspondant à la boucle de circulation soient apparentes.

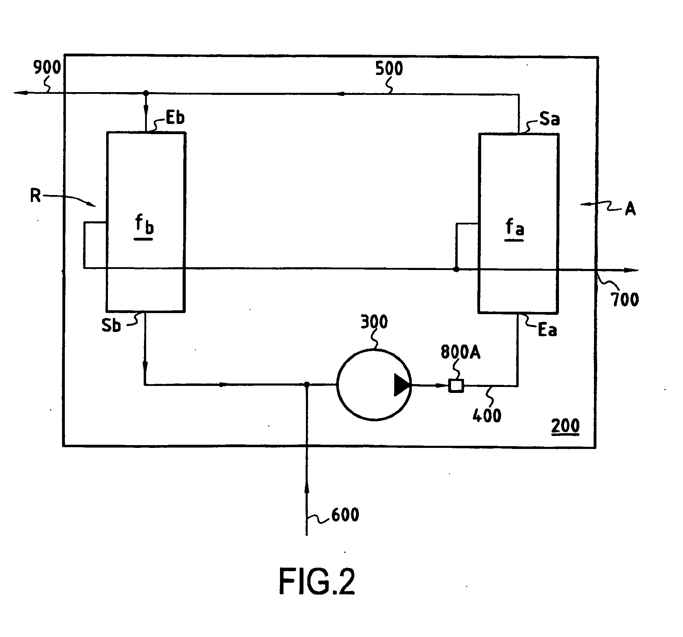

De tels dispositifs commercialisés par la société SIVA sont appelés TIS. Certains de ces dispositifs sont, notamment, décrits dans les demandes de brevet FR 2 810 256 et WO 01/96003 auxquelles on pourra se référer pour plus de détails. La **Figure 2** représente de façon schématique une variante de réalisation d'un module de type TIS. La boucle et la pompe de circulation sont intégrées au module. Par souci de simplification, des éléments identiques à ceux décrits en relation avec les **Figure 1A** et **1B** portent la même référence. Le module **200** comporte une série aller $f_a$ et une série retour $f_b$ d'éléments de filtration formant des circuits aller **A** et retour **R** d'une boucle de circulation pour le fluide à filtrer. Les éléments de filtration de la série aller $f_a$ sont reliés par l'intermédiaire de leur entrée **Ea** à l'entrée du module pour le fluide à traiter, la connexion se faisant par la canalisation **400** d'amenée du fluide à filtrer. Après avoir circulé tangentiellement le long des éléments de filtration de la série $f_a$ aller, le rétentat est évacué par leur sortie **Sa.** Les éléments de filtration, qui comportent chacun au moins un canal de circulation pour le fluide à filtrer, assurent la filtration dudit fluide, en vue d'obtenir à la surface périphérique des éléments de filtration, la sortie du filtrat destiné à être récupéré dans un volume de collecte relié à la sortie **700** du filtrat du module. La sortie **Sa** est reliée à l'entrée **Eb** des éléments de filtration de la série retour $f_b$ d'éléments de filtration qui, en représentation schématique, est située sur la canalisation de retour **500** du rétentat. Le rétentat sortant en sortie **Sb** des éléments de filtration de la série retour $f_b$ est, au moins en partie, réinjecté dans le fluide à traiter amené par la canalisation **600**. La boucle comporte une sortie d'évacuation **900** pour une partie du rétentat. Une partie du rétentat peut être évacuée :

- soit, selon une variante non représentée sur la **Figure 2,** en aval de la série retour $f_b$ d'éléments de filtration,
- soit en aval de la série aller **$f_a$** d'éléments de filtration et en amont de la deuxième retour **$f_b$** d'éléments de filtration, comme représenté sur la **Figure 2.**

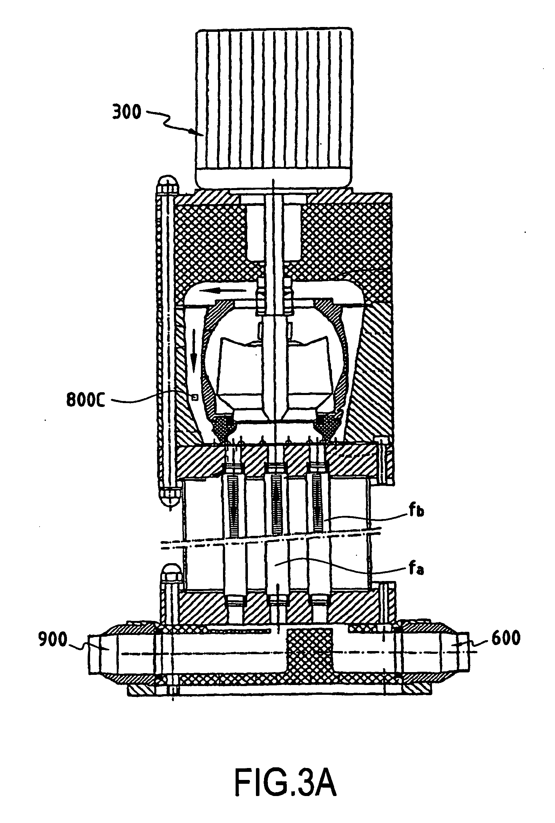

Le fluide circule à l'intérieur du module **200** selon le sens indiqué sur la **Figure 2.** La pompe, ou du moins la turbine de la pompe de circulation, est située sur la boucle de circulation. La turbine **300** peut être située, selon une variante non représentée, en aval de la série aller **$f_a$** des éléments de filtration, mais en amont de la série retour **$f_b$.** Ce positionnement relatif de la turbine est, par exemple, adopté dans un module TIS, notamment décrit dans WO 01/96003 et illustré **Figure 3A,** sur laquelle certaines des références de la **Figure 2** ont été reportées.

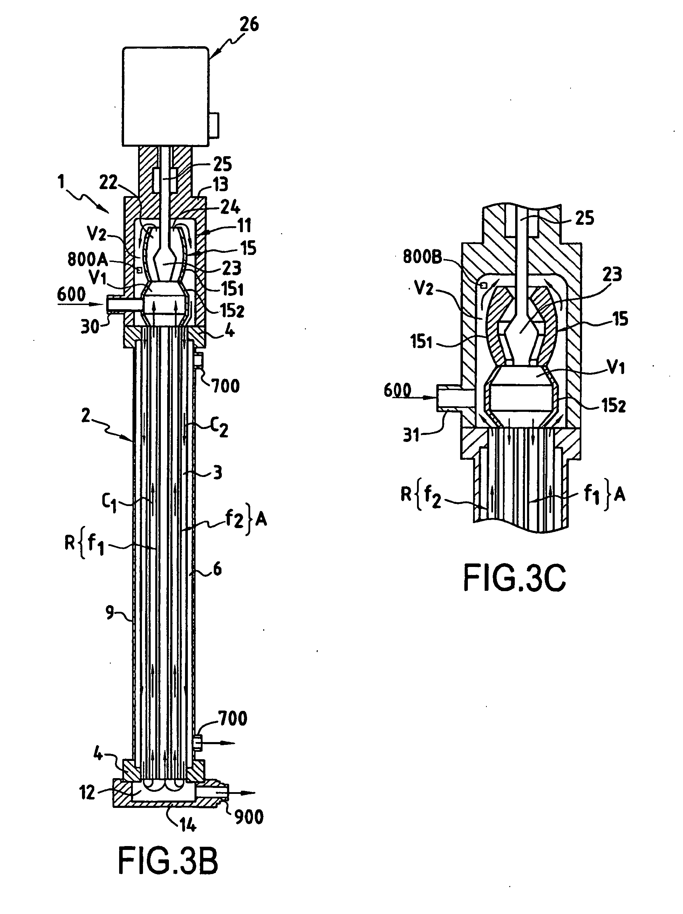

De façon avantageuse, Il est également possible que le dispositif soit conçu de façon à ce que la pompe **300** soit située entre l'endroit où débouche la canalisation **600** d'alimentation et l'entrée **Ea** de la série aller **$f_a$** des éléments de filtration comme illustré **Figure 2.** Cette variante est également illustrée **Figures 3B** et **3C.**

Dans le cas des modules TIS, la sonde de détection est positionnée à l'intérieur du module **200,** au sein de la boucle de circulation. Comme précédemment décrit, l'information sera, de préférence, obtenue à partir d'une mesure réalisée sur le fluide à filtrer, par exemple en aval de l'endroit où la canalisation **600** d'alimentation du fluide à traiter et la canalisation **400** de retour du rétentat se rejoignent et en amont de l'entrée **Ea** des éléments de filtration de la série aller **f$_a$,** comme par exemple illustré sous la référence **800A** à la **Figure** 2. Selon une autre variante non représentée à la **Figure 2,** l'information détectée peut être détectée sur le rétentat, par exemple en sortie de la série aller f$_a$ ou de la série retour **f$_b$** des éléments de filtration. Dans le cadre dé la description, et comme cela ressort des **Figures 3A, 3B** et **3C** et de leur description qui va suivre, le terme « canalisation » est à interpréter au sens large et peut correspondre, dans certains cas, à des chambres de circulation.

Les **Figures 3A, 3B** et **3C,** sur lesquelles certaines des références de la **Figure 2** ont été reportées, sont des vues en coupe de dispositifs de type TIS dans lesquels une sonde de détection a été positionnée. Dans la variante illustrée **Figure 3A** qui ne fait pas partie de l'invention et correspond au dispositif décrit dans WO 01/96003 à sa figure 3, la sortie **900** d'évacuation d'une partie du rétentat est située après la sortie de la série retour **f$_b$** d'éléments de filtration. Sur le dispositif illustré **Figure 3A,** la turbine **300** est située en aval de la série aller **f$_a$** d'éléments de filtration et en amont de la série retour **f$_b$.** La sonde **800C** détecte une information sur le rétentat et est située après la série aller **f$_a$** d'éléments de filtration, entre la turbine **300** et la série retour **f$_b$** d'éléments de filtration. Les **Figures 3B** et **3C,** quant à elles, correspondent, en ce qui concerne le positionnement relatif de la pompe **300** et de la sortie **900** d'évacuation d'une partie du rétentat, à la représentation schématique de la **Figure 2.**

Un tel dispositif peut présenter un inconvénient dans certaines conditions de fonctionnement. En partant du principe que la valeur de la perte de charge dans chaque circuit aller ou retour, consécutive à la vitesse de circulation du fluide, est égale à ΔP, la pompe de circulation ajoute deux fois la perte de charge (circuit aller et retour) à la valeur de la pression d'alimentation Pa pour assurer la circulation du fluide dans la boucle de circulation. La pression à la sortie du circuit aller, correspondant aussi à l'aspiration de la pompe de circulation, est égale à Pa -ΔP. Au refoulement de la pompe de circulation, la pression est égale à Pa + ΔP. Il est à noter que la pression à l'aspiration est égale à Pa-ΔP. Aussi, en fonction des valeurs de Pa et de ΔP, une telle pression à l'aspiration peut prendre une valeur négative, ce qui signifie que les éléments de filtration peuvent aspirer du filtrat. Il s'ensuit une perte inévitable de rendement sur la quantité de liquide filtré.

Un tel inconvénient est solutionné par le dispositif présenté aux **Figures 3B** et **3C** qui vont maintenant être décrites en détails.

Dans le dispositif **1** représenté **Figure 3B,** les éléments de filtration **3** sont montés, à chacune de leurs extrémités, sur une plaque de positionnement **4** montée à l'intérieur d'un carter **2.** De manière classique, chaque plaque de positionnement **4** comporte un trou permettant le passage de l'extrémité d'un élément de filtration tubulaire **3.** Chaque trou est équipé d'un joint d'étanchéité permettant d'assurer un montage étanche des éléments de filtration **3** sur les plaques de positionnement **4.** Les plaques de positionnement **4** définissent, entre elles et avec le carter **2,** un volume de collecte **6** pour le filtrat sortant de la surface périphérique des éléments de filtration **3.** Ce volume de collecte **6** communique, par au moins une et, dans l'exemple illustré, deux sorties **700** d'évacuation du filtrat. Dans l'exemple illustré, chaque sortie **700** pour le filtrat est constituée par un tronçon de canalisation raccordé sur une virole **9** constituant, en partie, le carter **2** et à chaque extrémité de laquelle sont montées les plaques de positionnement **4.** La virole **9** délimite ainsi, avec les plaques de positionnement **4,** le volume de collecte **6.**

Le dispositif de filtration **1** comporte, également, une première chambre de communication **11** aménagée dans le carter **2** et dans laquelle débouche, au-delà de la plaque de positionnement **4,** l'une des extrémités des éléments de filtration **3,** tandis que l'autre extrémité des éléments de filtration **3** débouche au-delà de l'autre plaque de filtration **4,** dans une deuxième chambre de communication **12.** Tel que cela apparaît plus précisément à la **Figure 3B,** la première chambre **11** est délimitée à l'intérieur d'un boîtier de fermeture **13** raccordé à la virole **9** et/ou à la plaque de positionnement **4,** tandis que la deuxième chambre de communication **12** est délimitée entre la plaque de positionnement voisine **4** et un fond de fermeture **14** monté sur la virole **9** et/ou la plaque de positionnement **4.** Ainsi, le carter **2** est constitué par la virole **9,** le boîtier **13** et le fond de fermeture **14.**

Le dispositif **1** comporte des moyens de séparation **15** montés dans la première chambre de communication **11,** afin de diviser cette première chambre, d'une part, en un premier volume **V$_1$,** communiquant avec une première série **f$_1$** d'éléments de filtration **3,** parcouru par le fluide à traiter selon un premier sens représenté par la flèche **C1** et, d'autre part, en un deuxième volume **V$_2$** communiquant avec une seconde série **f$_2$** d'éléments de filtration **3** traversés par le fluide selon un deuxième sens **C$_2$** contraire au premier sens **C$_1$.** Les moyens de séparation **15** sont montés de manière étanche sur la plaque de positionnement **4** voisine, de manière à diviser le volume de la première chambre **11** en un premier volume **V$_1$** et en un deuxième volume **V$_2$,** situés, respectivement, à l'intérieur et à l'extérieur des moyens de séparation. Il doit être compris que les éléments de filtration **3,** appartenant à la première série, sont différents des éléments de filtration **3** de la seconde série **f$_2$.** Selon une caractéristique préférée de réalisation, les moyens de séparation **15** sont montés de manière que les séries **f$_1$, f$_2$** des éléments de filtration **3** comportent un nombre sensiblement égal d'éléments de filtration **3.**

Selon cet exemple, les éléments de filtration **3,** appartenant à la première série **f$_1$,** sont situés à l'intérieur de l'enveloppe virtuelle prolongeant les moyens de séparation **15,** tandis que les éléments de filtration **3,** appartenant à la deuxième série **f$_2$,** sont situés à l'extérieur de cette enveloppe virtuelle. Il doit être compris que les éléments de filtration **3** des première série **f₁** et deuxième série **f₂** forment les circuits aller et retour d'une boucle de circulation pour le fluide à traiter, réalisée à l'intérieur du carter. Dans l'exemple illustré à la **Figure 3B,** les éléments de filtration de la deuxième série **f₂** forment le circuit aller **A,** tandis que les éléments de filtration de la première série **f₁** forment le circuit retour **R.**

Les moyens de séparation **15** délimitent intérieurement un logement **22** pour une turbine **23** d'une pompe de circulation. Les moyens de séparation **15,** qui seront décrits en détail dans la suite de la description, se présentent sous une forme tubulaire ou cylindrique et sont montés, de manière étanche, sur la plaque de positionnement voisine **4.** Les moyens de séparation **15** délimitent intérieurement le premier volume **V₁** et extérieurement par rapport au boîtier de fermeture **13,** le deuxième volume **V₂.** Le boîtier de fermeture **13** peut être fixé à la plaque de positionnement **4** par l'intermédiaire de moyens d'assemblage. Les moyens de séparation **15** comportent un passage de communication **24** assurant le passage du fluide à traiter entre les volumes **V₁, V₂.** La turbine **23** comporte un axe d'entraînement **25,** relié à un moteur d'entraînement en rotation **26** monté sur le boîtier de fermeture **13.** De préférence, l'axe d'entraînement **25** est monté dans l'alignement de l'axe de la virole **9** dans laquelle les éléments de filtration 3 sont répartis régulièrement suivant l'axe de la virole. Bien entendu, le boîtier de fermeture **13** comporte un passage étanche pour l'arbre d'entraînement **25.**

Dans l'exemple illustré à la **Figure 3B,** il est considéré que le moteur **26** d'entraînement de la pompe fonctionne en mode aspiration. La turbine permet, d'une part, d'aspirer le fluide provenant des membranes de la première série **f₁** formant le circuit retour et, d'autre part, de refouler le fluide par le passage de communication **24** et le volume **V₂,** afin d'alimenter les membranes de la deuxième série f₂ formant le circuit aller de la boucle de circulation.

Selon une autre caractéristique de l'objet de l'invention, le dispositif **1** comporte une entrée **600** pour le fluide à traiter qui débouche dans la première chambre de communication **11** du carter, entre la turbine **23** de la pompe de circulation et les éléments de filtration **3** de la série formant le circuit retour de la boucle de circulation, à savoir les éléments de filtration de la première série **f₁** dans l'exemple illustré à la **Figure 3B.**

Selon une autre caractéristique avantageuse, la deuxième chambre de communication **12** est aménagée dans le fond de fermeture **14** qui est équipé dans l'exemple illustré d'une sortie **900** d'évacuation du rétentat. La deuxième chambre de communication **12** est délimitée par la plaque de positionnement **4** voisine et assure la communication entre les éléments de filtration **3** de la deuxième série **f₂** et les éléments de filtration **3** de la première série **f₁.**

Le fonctionnement du dispositif **1,** décrit à la **Figure 3B,** découle directement de la description qui précède. Le fluide à traiter arrive par l'entrée **600** dans le volume **V₁** et se trouve aspiré sous l'effet du fonctionnement de la turbine **23** dans les éléments de filtration **3** de la deuxième série **f₂** en ayant, au préalable, passé dans le volume **V₂,** via le passage de communication **24.** Le fluide traverse les éléments de filtration **3** de la deuxième série **f₂** qui forment ainsi le circuit aller **A** de la boucle de circulation pour déboucher dans la deuxième chambre de communication **12** pour être distribué, d'une part, dans la sortie **900** d'évacuation du rétentat et, d'autre part, sous l'effet de l'aspiration de la turbine, à travers les éléments de filtration **3** de la première série **f₁** qui forment le circuit retour de la boucle de circulation. Le fluide ayant circulé à travers les éléments de filtration **3** de la première série **f₁** est récupéré dans le volume **V₁.** Le cycle de filtration se poursuit selon la description qui précède. Sur l'exemple représenté à la **Figure 3B,** la sonde **800A** est située au niveau du volume **V₂,** en aval de la turbine **23** selon le sens de circulation du fluide, et en amont de l'entrée des éléments de filtration de la deuxième série **f₂** constituant le circuit aller. La détection de l'information se fait donc au niveau du fluide à filtrer. Les positionnements de la sonde précédemment décrits peuvent également être prévus.

Dans l'exemple illustré à la **Figure 3B,** l'entrée **600** pour le fluide débouche dans le volume **V₁** de la première chambre de communication **11,** située à l'intérieur des moyens de séparation. Selon cet exemple, de réalisation, l'entrée **600** comporte un élément tubulaire **30** traversant le boîtier **13,** le volume **V₂** de la chambre de communication **11** et les moyens de séparation **15,** afin de déboucher dans le volume **V₁** délimité à l'intérieur des moyens de séparation **15.** Selon un exemple de réalisation, les moyens de séparation **15** comportent un stator **15₁** de forme tubulaire, à l'intérieur duquel est montée la turbine **23.** Les moyens de séparation **15** comportent également un corps tubulaire **15₂** prolongeant le stator **15₁** et monté, de manière étanche, sur la plaque de positionnement voisine **4** mais, également, sur le stator **15₁.** De préférence, ce corps tubulaire **15₂** est pourvu d'une garniture métallique sur laquelle s'appuie la turbine. Cette garniture assure ainsi l'étanchéité entre le stator et le corps tubulaire, ainsi que la rotation de la turbine. Le corps tubulaire **15₂** possède une hauteur suffisante permettant le montage de l'élément tubulaire **30** qui est monté radialement sur le corps tubulaire **15₂.** L'élément tubulaire **30** débouche ainsi à l'intérieur du corps tubulaire **15₂,** entre la sortie des éléments de filtration **3** de la première série **f₁** et la turbine **23** montés à l'intérieur des moyens de séparation **15** c'est-à-dire dans le premier volume **V₁.**

L'élément tubulaire **30** est ainsi accessible de l'extérieur du carter, de manière à pouvoir être relié à un conduit de raccordement. Il est à noter que le corps tubulaire **15₂** peut être pourvu d'une collerette de montage en appui sur la paroi interne du boîtier **13.** Cette collerette, qui s'étend ainsi radialement entre le corps tubulaire **15₂** et le boîtier **13,** est munie de passages pour le fluide circulant à l'intérieur du volume **V₂.**

Dans l'exemple qui précède, la pompe aspire le fluide à travers les éléments de filtration de la première série $f_1$ et rejette le fluide à travers les éléments de filtration de la deuxième série $f_2$. Bien entendu, par inversion du sens de rotation de la turbine, il peut être prévu d'aspirer à travers les éléments de filtration **3** de la deuxième série $f_2$ et de refouler le fluide à travers les éléments de filtration **3** de la première série $f_1$.

Selon cette variante de réalisation illustrée à la **Figure 3C,** les éléments de filtration **3** de la première série $f_1$ sont alimentés par le premier volume $V_1$ formant ainsi le circuit aller **A** de la boucle de circulation. En sortie des éléments de filtration **3** de la première série $f_1$, le fluide est réparti, d'une part, dans la sortie d'évacuation **S** du rétentat et, d'autre part, dans les éléments de filtration **3** de la deuxième série $f_2$ qui forment le circuit retour **R**. Le fluide pénètre dans le deuxième volume $V_2$ en sortie des éléments de filtration **3** de la deuxième série $f_2$.

Dans cet exemple de réalisation, l'entrée **600** du fluide débouche dans le deuxième volume $V_2$, c'est-à-dire entre la turbine **23** et les éléments de filtration **3** de la deuxième série $f_2$ formant le circuit retour **R** de la boucle de circulation. Ainsi, le fluide du deuxième volume $V_2$, provenant de l'entrée **600** et de la sortie des éléments de filtration de la deuxième série $f_2$ **est** aspiré par la turbine **23** via le passage de communication **24.**

Dans cet exemple de réalisation, l'entrée **600** pour le fluide à traiter débouche dans le volume $V_2$, à l'extérieur des moyens de séparation **15.** Dans cet exemple de réalisation, l'entrée **600** comporte un raccord tubulaire **31** traversant le boîtier **13** pour être accessible de l'extérieur du carter et déboucher à l'extérieur des moyens de séparation **15.** Dans l'exemple illustré, les moyens de séparation **15** comportent le stator $15_1$ et le corps tubulaire $15_2$. Il est à noter que le corps tubulaire $15_2$ peut être supprimé selon cette variante de réalisation.

Dans l'exemple illustré à la **Figure 3B,** la sortie d'évacuation du rétentat **900** communique avec la deuxième chambre de communication **12.** Il est à noter que cette sortie d'évacuation du rétentat **900** peut être aménagée pour communiquer avec la première chambre de communication **11** dans laquelle débouche également l'entrée **600** du fluide à traiter. Dans l'exemple illustré à la **Figure 3B,** la sortie d'évacuation du rétentat **900** peut traverser soit le boîtier **13** pour déboucher dans le deuxième volume $V_2$, soit le boîtier **13** et le corps tubulaire $15_2$ pour déboucher dans le premier volume $V_1$ en face ou non de l'entrée **600.** Dans l'exemple illustré à la **Figure 3C,** la sortie d'évacuation du rétentat **900** peut traverser le boîtier **13** pour déboucher dans le deuxième volume $V_2$, en face ou non de l'entrée **600.**

Sur l'exemple de réalisation présentée Figure **3C,** la sonde **800B** est située, au niveau du volume $V_2$, en amont de la turbine **23,** selon le sens de circulation du fluide. Là encore, les positionnements de la sonde précédemment décrits peuvent également être prévus.

Les exemples ci-après permettent d'illustrer et de mieux comprendre l'invention mais n'ont aucun caractère limitatif.

**Exemple 1 : contrôle à partir de la masse volumique**

Une installation, intégrant un dispositif tel que décrit dans la demande de brevet WO 01/96003 et commercialisé par la société SIVA sous la marque TIS (qui signifie « Tangential Integrated System »), est équipée d'une sonde de marque MOBREY et de type MCU 200.

Une sonde MOBREY de type MCU 200 est disposée dans la partie de l'installation qui se trouve au refoulement de la pompe de circulation et juste à l'entrée du dispositif comprenant le module de membranes, (référence 800 C) comme illustré **Figure 3A.**

Le liquide utilisé est du vin rouge. L'intérêt du dispositif TIS est de pouvoir réaliser des concentrations élevées (faible volume captif) et de limiter l'échauffement car le temps de résidence du vin à l'intérieur du dispositif est très court.

Les fortes concentrations ont pour avantage d'augmenter le rendement global de la filtration. De plus, étant donné que le volume mort est très faible, il y a production d'un faible volume de concentrat résiduel, à l'arrêt de l'installation. Couramment, le TIS réalise des rendements de 99 % pour la filtration du vin.

Deux vins ont été testés :

- un vin de type la correspondant à un rétentat de vin après filtration et préalablement concentré d'un facteur de concentration de 300,
- un vin de type 1b correspond à un rétentat de vin rouge d'un cépage différent du premier et préalablement concentré à un facteur de concentration de 300 durant l'opération de filtration.

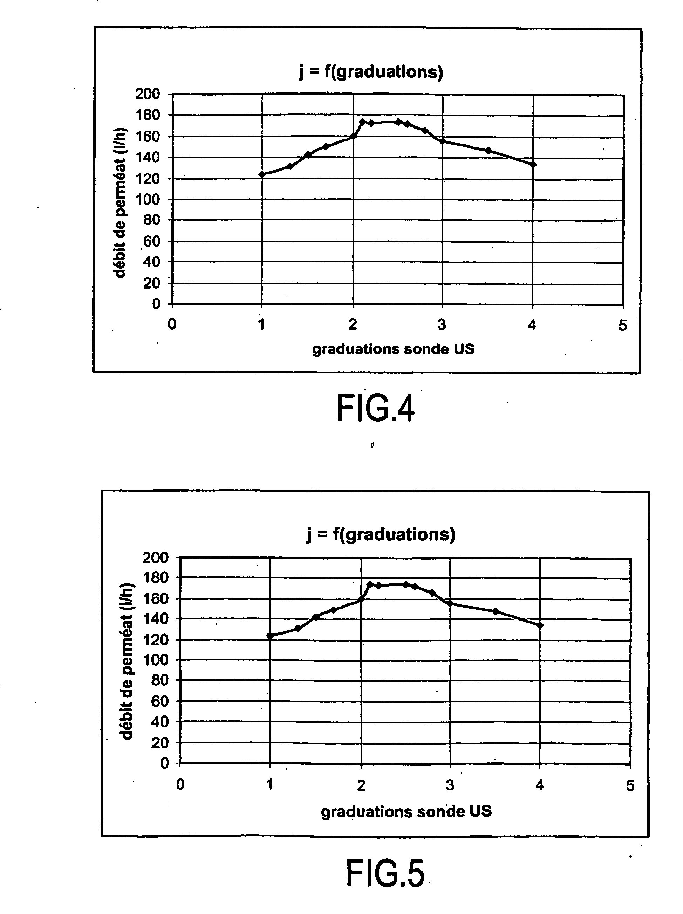

Le vin de type 1a est disposé dans le système TIS selon les conditions recommandées d'utilisation du système. La sonde indique les niveaux de masse volumique du liquide à filtrer avant son introduction dans le module de filtration. La courbe présentée **Figure 4** montre les variations du débit de perméat en fonction de l'indication de la sonde.

On observe que le débit de perméat augmente jusqu'à une valeur définie par 3,5 graduations de la sonde MOBREY, puis se réduit. A cette valeur, le facteur de concentration réalisé dans l'installation TIS est de 4,6 ce qui correspond à un facteur de concentration final de 300 * 4,6 = 1380. Le vin est donc concentré 1380 fois par l'installation à membrane. Le rendement pour cette concentration est égal à 1379/1380 = 99,92 %. A la valeur de 5, l'installation est arrêtée en raison des risques importants de prise en gel. Dans ce cas, le facteur de concentration du système TIS est 7,1 ce qui correspond à un facteur de concentration final de 2130. A titre d'information, le rendement total est de 99,95 %.

Le vin de type 1b est également disposé dans l'installation TIS selon les conditions recommandées d'utilisation du système. La sonde indique les niveaux de masse volumique du liquide à filtrer avant son introduction dans le module de filtration.

La courbe présentée **Figure 5** montre les variations du débit de perméat en fonction des indications de la sonde. Comme dans le cas du vin de type 1a, on observe l'existence d'un maximum pour une indication de la sonde d'une valeur de 2,5. Ce vin est donc beaucoup plus colmatant que le premier. Pour cette valeur de la sonde, le facteur de concentration réalisé par l'installation TIS est de 4,2. La concentration finale est donc de 300 * 4,2 = 1320. Dans ce cas, le rendement de l'opération de filtration est égal à 99,92%.

Pour la valeur de 4 de la sonde, l'installation a été arrêtée et aucune prise en gel n'a été observée. Pour cette valeur de la sonde, le facteur de concentration est de 7,0. Le facteur de concentration final est donc de 2100.

Pour les deux types de vins, la sonde permet de détecter des valeurs de masse volumique à partir desquelles le débit de perméat décroît.

Pour le vin de type 1a cette valeur correspond à une indication de 3,5 sur la sonde et pour le vin de type 1b, à une indication de 2,5. En tenant compte des résultats obtenus avec ces deux vins, il est possible de définir, pour la famille de vins rouges, correspondant au vin de type 1a et 1b, une mesure alarme pour la sonde égale à 2 au-delà de laquelle l'installation sera arrêtée et qui permette :

- qu'aucun risque de prise en gel du système n'apparaisse. L'installation peut donc être vidangée sans difficultés.
- que la valeur du débit de perméat reste inférieure à la valeur critique à partir de laquelle le débit diminue.
- que le rendement soit toujours très élevé.

**Exemple 2 : contrôle à partir de la vitesse de circulation**

Dans cet exemple, le dispositif TIS utilisé est modifié par rapport à la demande de brevet WO 01/96003 de la manière suivante :

• l'alimentation du produit à traiter est déplacée afin de se situer entre les extrémités de sortie des membranes et l'aspiration de la pompe de circulation ;
• le sens de rotation de la pompe de circulation est modifié afin que l'aspiration s'effectue à partir des membranes situées sur la partie périphérique du carter.

Le dispositif correspond à celui de la **Figure 3C.** La sonde utilisée est basée sur la mesure du temps de déplacement d'une onde ultrasonore à l'intérieur d'un fluide. La sonde utilisée est un contrôleur de débit de la société IFM et est équipée de 10 diodes numérotées de 0 à 9. Le débit est d'autant plus élevé que le nombre de diodes allumées est important.

La sonde a été étalonnée en débit en déterminant à partir d'un débitmètre de mesure classique, la correspondance entre le débit et le nombre de diodes allumées. Cet étalonnage a été effectué à partir d'eau.

Le tableau ci-dessous donne cette correspondance.

| Diodes allumés | Débit (m3/h) |
|---|---|
| 9 | 7 |
| 9 | 6 |
| 9 | 5 |
| 9 | 4 |
| 8 | 3,8 |
| 8 | 3 |
| 7 | 2,5 |
| 7 | 2 |
| 6 | 1,8 |
| 5 | 1,5 |
| 5 | 1,3 |
| 4 | 1,15 |
| 3 | 1 |
| 2 | 0,73 |
| 1 | 0,59 |
| 0 | 0,4 |

La sonde est disposée sur la canalisation située à l'aspiration de la pompe de circulation (position 800 B), comme le montre la **Figure 3C.**

La section de cette canalisation étant connue, il est possible de déterminer le débit circulant dans cette canalisation, puis la vitesse de circulation du fluide à intérieur des membranes.

Deux tests ont été effectués avec deux vins différents nommés 2a et 2b, sur cette installation incorporant cette sonde dont le signal émis est caractéristique de la vitesse du fluide à filtrer. Ces deux vins correspondent à des concentrats de vins obtenus durant des opérations de filtration. Les facteurs de concentration respectifs de ces concentrats sont de 450 et 500.

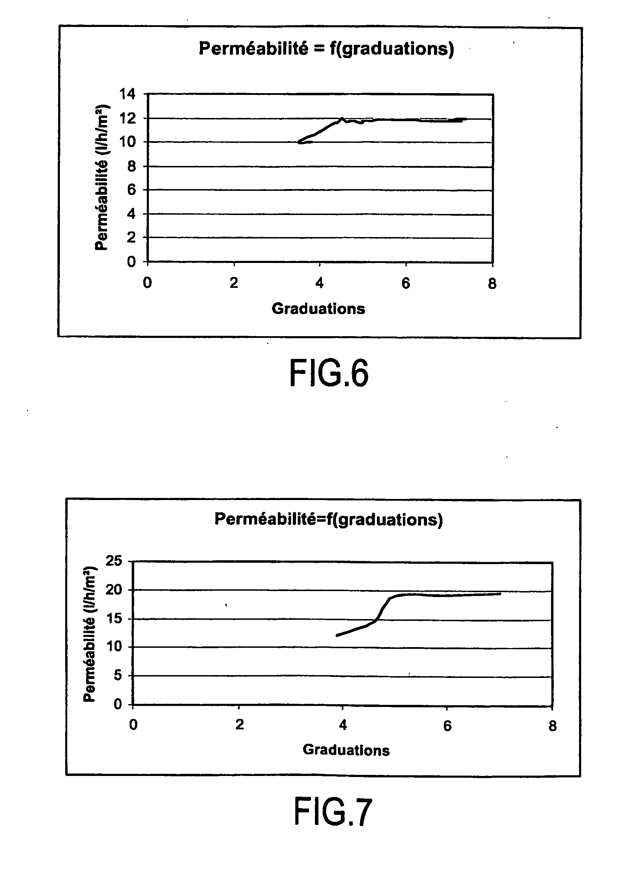

Pour le vin 2a, la courbe donnée **Figure 6,** qui représente les variations de la perméabilité de la membrane en fonction du nombre de diodes allumées, est obtenue. On observe que la perméabilité ne varie pratiquement pas tant qu'au moins cinq diodes sont allumées. Au delà, la perméabilité diminue.

Dès que 4 diodes seulement ont été allumées, l'installation a été arrêtée, rincée avec de l'eau puis les membranes ont été démontées. L'examen de ces dernières montre alors qu'un certain nombre de canaux sont bouchés. Continuer la concentration aurait eu pour conséquence le bouchage complet des canaux. D'où le choix d'un nombre de 5 diodes allumées comme valeur maximale de la concentration sans qu'aucun risque de bouchage n'apparaisse. Le facteur de concentration au point correspondant à 5 diodes allumées est de 2,5. La concentration totale du vin est donc de 450 X 2,5 soit 1125. Le rendement total est donc de 99,9 % ce qui est une valeur très élevée.

Pour le vin 2b, la courbe donnée **Figure 7,** qui représente les variations de la perméabilité de la membrane en fonction du nombre de diodes allumées, est obtenue. On observe à peu près le même comportement que pour le vin 2a. En effet, la perméabilité est indépendante du nombre de diodes allumées tant qu'au moins 5 diodes restent allumées. Puis, cette perméabilité chute brutalement.

Là encore, l'installation a été arrêtée, lorsque plus que 4 diodes n'ont été allumées, et l'installation a été rincée avec de l'eau, puis les membranes ont été démontées. L'examen de ces dernières montre, alors, qu'un certain nombre de canaux sont bouchés. Continuer la concentration aurait eu pour conséquence le bouchage complet des canaux. D'où le choix d'un nombre de 5 diodes allumées comme valeur alarme, afin d'éviter tout risque de colmatage des membranes. Le facteur de concentration correspondant au point où l'on passe de 6 à 5 diodes allumées est de 1,5.

La concentration totale du vin est donc de 500 X 1,5 soit 750. Le rendement total est, quant à lui, de 99,8 % ce qui est également une valeur très élevée.

Comme pour la sonde qui détecte une mesure caractéristique de la masse volumique du liquide à filtrer, l'utilisation d'une sonde qui donne une information sur la vitesse de circulation permet de sélectionner le point maximum de concentration au delà duquel le risque de colmatage des membranes ou de prise en masse du liquide est important.

Bien entendu, les résultats obtenus dans les exemples 1 et 2 précédents avec une installation intégrant un dispositif de filtration tangentielle de type TIS sont transposables sur une installation de filtration incorporant une boucle de circulation classique. La seule différence est la température de fonctionnement qui est plus élevée dans une boucle classique avec pour conséquence une viscosité plus faible et, donc la possibilité de continuer plus longtemps la concentration.

**Revendications**

1. Dispositif de filtration en mode tangentiel d'un fluide à traiter destiné à être réparti en un filtrat et un rétentat, comprenant :

   ■ une série d'éléments de filtration qui comportent au moins une entrée pour un fluide à filtrer, au moins une sortie pour le filtrat ayant traversé l'élément de filtration et au moins une sortie pour le rétentat ayant circulé le long de l'élément de filtration, lesdits éléments étant incorporés dans une boucle de circulation, de sorte qu'au moins une partie du rétentat est réinjectée dans le fluide à traiter avant l'entrée dans lesdits éléments de filtration,

   ■ une pompe de circulation dont la turbine est intégrée dans la boucle de circulation,

   ■ un module de filtration, nommé carter **(2),** dans lequel la boucle de circulation est intégrée et est réalisée par une série aller **(f$_a$)** et une série retour **(f$_b$)** d'éléments de filtration formant des circuits aller **(A)** et retour **(R),** qui comprend :

      - au moins une entrée **(600)** pour le fluide à traiter,
      - au moins une sortie **(900)** d'évacuation du rétentat,
      - une série d'éléments de filtration **(3)** de forme tubulaire s'étendant parallèlement les uns aux autres en traversant de manière étanche, à chacune de leurs extrémités, une plaque de positionnement **(4),** les éléments de filtration **(3)** comportant chacun au moins un canal de circulation pour le fluide à traiter et assurant la filtration dudit fluide, en vue d'obtenir, à la surface périphérique des éléments de filtration, la sortie du filtrat destiné à être récupéré dans un volume de collecte **(6)** situé entre les plaques de positionnement **(4)** et le carter **(2),**
      - au moins une sortie **(700)** pour le filtrat communiquant avec le volume de collecte **(6)** du filtrat,
      - une première chambre de communication **(11)** dans laquelle débouche l'une des extrémités des éléments de filtration et dans laquelle sont montés des moyens de séparation **(15),** en contact étanche avec la plaque de positionnement **(4)** voisine, pour diviser ladite chambre en des premier **(V$_1$)** et deuxième **(V$_2$)** volumes délimités respectivement à l'intérieur et à l'extérieur des moyens de séparation et communiquant avec, respectivement, une première série **(f$_1$)** et une deuxième série **(f$_2$)** d'éléments de filtration **(3)** formant des **(A)** aller et retour **(R)** d'une boucle de circulation pour le fluide à traiter, les moyens de séparation comportant un passage de communication **(24)**, entre le deuxième volume **(V$_2$)** et le premier volume **(V$_1$)**, à l'intérieur duquel est montée une turbine **(23)** d'une pompe de circulation, munie d'un axe d'entraînement **(25)** s'étendant à l'extérieur de la première chambre **(11)** pour être reliée à un moteur d'entraînement **(26)**,
      - et une deuxième chambre de communication (**12**) dans laquelle débouche l'autre des extrémités des éléments de filtration et assurant une communication pour le fluide à traiter, entre les éléments de filtration de la première série (**f₁**) et ceux de la deuxième série (**f₂**),
- l'entrée (**600**) pour le fluide à traiter débouchant dans la première chambre de communication (**11**) du carter entre la turbine (**23**) de la pompe de circulation et les éléments de filtration (**3**) de la série formant le circuit retour (**R**) de la boucle de circulation,

■ au moins une sonde de détection d'une information caractéristique du fluide à filtrer, et représentative des risques de gélification du fluide à filtrer au sein du ou des éléments de filtration et/ou des risques de colmatage total du ou des éléments de filtration.

2. Dispositif selon la revendication 1, **caractérisé en ce que** le moteur d'entraînement de la pompe est piloté de manière que les éléments de filtration (**3**) de la deuxième série (**f₂**), alimentés par le deuxième volume (**V₂**) forment le circuit aller, tandis que les éléments de filtration (**3**) de la première série (**f₁**), débouchant dans le premier volume (**V₁**), forment le circuit retour et **en ce que** l'entrée (**E**) pour le fluide à traiter débouche dans le premier volume (**V₁**) de la première chambre (**11**) entre la sortie des éléments de filtration de la première série (**f₁**) et la turbine (**23**) montée à l'intérieur des moyens de séparation (**15**).

3. Dispositif selon la revendication 1, **caractérisé en ce que** le moteur d'entraînement de la pompe est piloté de manière que les éléments de filtration (**3**) de la première série (**f₁**), alimentés par le premier volume (**V₁**), forment le circuit aller, tandis que les éléments de filtration (**3**) de la deuxième série (**f₂**), débouchant dans le deuxième volume (**V₂**), forment le circuit retour et **en ce que** l'entrée (**E**) pour le fluide à traiter débouche dans le deuxième volume (**V₂**) de la première chambre délimité à l'extérieur des moyens de séparation (**15**) entre la sortie des élément de filtration (**3**) de la deuxième série (**f₂**) et la turbine (**23**) montée à l'intérieur des moyens de séparation (**15**).

4. Dispositif selon la revendication 1 ou 2, **caractérisé en ce que** l'entrée (**600**) pour le fluide à traiter comporte un élément tubulaire (**30**) de manière à déboucher à l'intérieur des moyens de séparation (**15**).

5. Dispositif selon la revendication 1 ou 3, **caractérisé en ce que** l'entrée (**600**) pour le fluide à traiter comporte un raccord tubulaire (**31**) de manière à déboucher à l'extérieur des moyens de séparation (**15**).

6. Dispositif selon l'une des revendications 1, 2 ou 4 **caractérisé en ce que** la sonde (**800A**) est située au niveau du deuxième volume (**V₂**), en aval de la turbine (**23**), selon le sens de circulation du fluide, et en amont de l'entrée des éléments de filtration de la deuxième série (**f₂**) constituant le circuit aller.

7. Dispositif selon la revendication 1, 3 ou 5 **caractérisé en ce que** la sonde (**800B**) est située, au niveau du deuxième volume (**V₂**), en amont de la turbine (**23**), selon le sens de circulation du fluide.

8. Dispositif selon l'une des revendications 1 à 7 **caractérisé en ce qu'**il comprend des moyens de comparaison de l'Information détectée avec une valeur seuil permettant d'évaluer les risques de gélification du liquide à filtrer au sein du ou des éléments de filtration et/ou les risques de colmatage total du ou des éléments de filtration.

9. Dispositif selon la revendication 8 **caractérisé en ce qu'**il comprend des moyens de déclenchement d'une procédure de sécurité, en fonction des résultats de la comparaison.

10. Dispositif selon l'une des revendications 1 à 9 **caractérisé en ce que** la sonde détecte une information dépendante de la concentration, de la viscosité, de la masse volumique et/ou de la vitesse de circulation du fluide à filtrer.

11. Dispositif selon l'une des revendications 1 à 10 **caractérisé en ce que** la sonde détecte une information dépendante de la masse volumique du fluide à traiter.

12. Dispositif selon l'une des revendications 1 à 10 **caractérisé en ce que** la sonde détecte une information dépendante de la vitesse de circulation du fluide à traiter.

13. Dispositif selon l'une des revendications 1 à 12 **caractérisé en ce que** la sonde fournit une information obtenue à partir d'une mesure réalisée sur le rétentat.

14. Dispositif selon l'une des revendications 1 à 12 **caractérisé en ce que** la sonde fournit une information obtenue à partir d'une mesure réalisée sur le fluide à filtrer.

15. Dispositif selon l'une des revendications 1 à 14 **caractérisé en ce que** la sonde est une sonde ultrasonique.

**Claims**

1. - Device for tangential filtration of a liquid to be treated intended to be separated into a filtrate and a retentate, comprising:

   ■ at least one filtering element which comprises at least one inlet for the liquid to be filtered, at least one outlet for the filtrate which has passed through the filtering element, and at least one outlet for the retentate which has circulated along the filtering element, said element being incorporated in a circulation loop so that at least part of the retentate is reinjected into the liquid to be treated before it enters the filtering element,
   ■ a circulator pump whose turbine is integrated in the circulation loop,
   ■ a filtration module, named casing (2), in which the circulation loop is integrated consisting of an outward series ($f_a$) and a return series ($f_b$) of filtering elements forming outward (**A**) and return (**R**) circuits, which comprises :

      ☐ at least one inlet (600) for the liquid to be treated,
      ☐ at least one evacuation outlet (900) for the retentate,
      ☐ a series of filtering elements (3) of tubular shape extending parallel to each other and, at each of their ends, passing sealingly through a positioning plate (4), the filtering elements (3) each comprising at least one circulation channel for the liquid to be treated and ensuring the filtration of said liquid, with a view to obtaining the outgoing filtrate on the peripheral surface of the filtering elements, this filtrate intended to be collected in a collection space (6) located between the positioning plates (4) and the casing (2),
      ☐ at least one outlet (700) for the filtrate communicating with the collection space (6) for the filtrate,
      ☐ a first communication chamber (11) into which one of the ends of the filtering elements leads, and in which separating means (15) are mounted, in sealed contact with the adjacent positioning plate (4), to divide said chamber into first (V1) and second (V2) volumes respectively delimited inside and outside the separating means and respectively communicating with a first series (f1) and a second series (f2) of filtering elements (3) forming outward (A) and return (R) circuits of a circulation loop for the liquid to be treated, the separating means comprising a communication passageway (24), between the second volume (V2) and first volume (V1), inside which a turbine (23) of a circulator pump is mounted and provided with a drive shaft (25) extending outside the first chamber (11) for connection to a driving motor (26),
      ☐ and a second communication chamber (12) into which the other end of the filtering elements leads, ensuring communication for the liquid to be treated between the filtering elements of the first series (f1) and those of the second series (f2),
      ☐ the inlet (600) for the liquid to be treated leading into the first communication chamber (11) of the casing between the turbine (23) of the circulator pump and the filtering elements (3) of the series forming the return circuit (R) of the circulation loop,

   ■ at least one probe to detect information characteristic of the liquid to be filtered, and representing risks of gelling of the liquid to be filtered in the filtering element(s) and / or risks of total fouling of the filtering element(s).

2. - Device according to claim 1, **characterized in that** the motor driving the pump is driven so that the filtering elements (3) of the second series ($f_2$), supplied by the second volume ($V_2$) form the outward circuit, whilst the filtering elements (3) of the first series ($f_1$), leading into the first volume ($V_1$), form the return circuit, and **in that** the inlet (E) for the liquid to be treated leads into the first volume ($V_1$) of the first chamber (11) between the exit from the filtering elements of the first series ($f_1$) and the turbine (23) mounted inside the separating means (**15**).

3. - Device according to claim 1, **characterized in that** the motor driving the pump is driven so that the filtering elements (3) of the first series ($f_1$), supplied by the first volume ($V_1$), form the outward circuit, whilst the filtering elements (3) of the second series ($f_2$), leading into the second volume ($V_2$), form the return circuit, and **in that** the inlet (E) for the liquid to be treated leads into the second volume ($V_2$) of the first chamber delimited outside the separating means (**15**) between the exit from the filtering elements (3) of the second series ($f_2$) and the turbine (23) mounted inside the separating means (**15**).

4. - Device according to claim 1 or 2, **characterized in that** the inlet (**600**) for the liquid to be treated comprises a tubular element (**30**) so as to lead to inside the separating means (**15**).

5. - Device according to claim 1 or 3, **characterized in that** the inlet (**600**) for the liquid to be treated comprises a tubular connector (**31**) so as to lead to outside the separating means (**15**).

6. - Device according to any of claims 1, 2 or 4 **characterized in that** the probe (**800A**) is positioned at the second volume (**V$_2$**), downstream of the turbine (**23**), in the direction of circulation of the liquid, and upstream of the entry into the filtering elements of the second series (**f$_2$**) forming the outward circuit.

7. - Device according to claim 1, 3 or 5, **characterized in that** the probe (**800B**) is positioned at the second volume (**V$_2$**), upstream of the turbine (**23**), in the direction of circulation of the liquid.

8. - Device according to any of claims 1 to 7, **characterized in that** it comprises means to compare the detected information with a threshold value used to assess the risk of gelling of the liquid to be filtered inside the filtering element(s) and / or the risk of complete fouling of the filtering element(s).

9. - Device according to claim 8, **characterized in that** it comprises means to trigger safety procedure in relation to the results of the comparison.

10. - Device according to any of claims 1 to 9, **characterized in that** the probe detects information on the concentration, the viscosity, the density and / or the rate of circulation of the liquid to be filtered.

11. - Device according to any of claims 1 to 10, **characterized in that** the probe detects information on the density of the liquid to be treated.

12. - Device according to any of claims 1 to 10, **characterized in that** the probe detects information on the rate of circulation of the liquid to be treated.

13. - Device according to any of claims 1 to 12, **characterized in that** the probe provides information obtained from a measurement taken on the retentate.

14. - Device according to any of claims 1 to 12, **characterized in that** the probe gives information obtained from a measurement taken on the liquid to be filtered.

15. - Device according to any of claims 1 to 14, **characterized in that** the probe is an ultrasound probe.

**Patentansprüche**

1. Vorrichtung zur Tangentialfiltration eines zu behandelnden Fluids, das dazu bestimmt ist, in ein Filtrat und in ein Retentat aufgeteilt zu werden, umfassend:

   - eine Reihe von Filterelementen, die wenigstens einen Einlaß für ein zu filterndes Fluid, wenigstens einen Auslaß für das Filtrat, das das Filterelement durchlaufen hat, sowie wenigstens einen Auslaß für das Retentat, das entlang des Filterelements geströmt ist, umfassen, wobei die Elemente in eine Zirkulationsschleife eingebaut sind, so daß wenigstens ein Teil des Retentats vor Eintritt in die Filterelemente wieder in das zu behandelnde Fluid eingeleitet wird,
- eine Umwälzpumpe, deren Turbine in die Zirkulationsschleife integriert ist,
- ein als Gehäuse (2) bezeichnetes Filtermodul, in das die Zirkulationsschleife integriert und hierin durch eine Hinreihe (f$_a$) und eine Rückreihe (f$_b$) von Filterelementen, die Hin- (A) und Rückleitungskreise (R) bilden, realisiert ist, umfassend:

   - wenigstens einen Einlaß (600) für das zu behandelnde Fluid,
   - wenigstens einen Auslaß (900) zum Abführen des Retentats,
   - eine Reihe von röhrenförmigen Filterelementen (3), die parallel zueinander verlaufen und dabei an jedem ihrer Enden eine Positionierungsplatte (4) dicht durchgreifen, wobei die Filterelemente (3) jeweils wenigstens einen Zirkulationskanal für das zu behandelnde Fluid umfassen und die Filtration des Fluids sicherstellen, um an der Umfangsfläche der Filterelemente das Austreten des Filtrats zu erzielen, das dazu bestimmt ist, in einem zwischen den Positionierungsplatten (4) und dem Gehäuse (2) befindlichen Sammelraum (6) aufgefangen zu werden,
   - wenigstens einen Auslaß (700) für das Filtrat, der mit dem Filtratsammelraum (6) in Verbindung steht,
   - eine erste Verbindungskammer (11), in die das eine der Enden der Filterelemente mündet und in der Trennmittel (15) in dichtem Kontakt mit der benachbarten Positionierungsplatte (4) angebracht sind, um die Kammer in einen ersten Raum (V$_1$) und einen zweiten Raum (V$_2$) zu unterteilen, die innerhalb bzw. außerhalb der Trennmittel begrenzt sind und mit einer ersten Reihe (f$_1$) bzw. einer zweiten Reihe (f$_2$) von Filterelementen (3), die Hin- (A) und Rückleitungen (R) einer Zirkulationsschleife für das zu behandelnde Fluid bilden, in Verbindung stehen, wobei die Trennmittel einen Verbindungsdurchgang (24) zwischen dem zweiten Raum (V$_2$) und dem ersten Raum (V$_1$) umfassen, in dem eine Turbine (23) einer Umwälzpumpe angeordnet ist, die mit einer Antriebsachse (25) ausgestattet ist, welche sich außerhalb der ersten Kammer (11) erstreckt, um mit einem Antriebsmotor (26) verbunden zu werden, und

- eine zweite Verbindungskammer (12), in die das andere der Enden der Filterelemente mündet und die eine Verbindung für das zu behandelnde Fluid zwischen den Filterelementen der ersten Reihe ($f_1$) und denen der zweiten Reihe ($f_2$) sicherstellt,

- wobei der Einlaß (600) für das zu behandelnde Fluid zwischen der Turbine (23) der Umwälzpumpe und den Filterelementen (3) der den Rückleitungskreis (R) der Zirkulationsschleife bildenden Reihe in die erste Verbindungskammer (11) des Gehäuses mündet,

- wenigstens eine Sonde zur Erfassung einer Information, die für das zu filternde Fluid kennzeichnend und für die Risiken eines Gelierens des zu filternden Fluids innerhalb des Filterelements oder der Filterelemente und/oder für die Risiken eines vollständigen Zusetzens des Filterelements oder der Filterelemente repräsentativ ist.

2. Vorrichtung nach Anspruch 1, **dadurch gekennzeichnet, daß** der Antriebsmotor der Pumpe derart gesteuert wird, daß die Filterelemente (3) der zweiten Reihe ($f_2$), die über den zweiten Raum ($V_2$) beaufschlagt werden, den Hinleitungskreis bilden, während die Filterelemente (3) der ersten Reihe ($f_1$), die in den ersten Raum ($V_1$) münden, den Rückleitungskreis bilden, und daß der Einlaß (E) für das zu behandelnde Fluid zwischen dem Ausgang der Filterelemente der ersten Reihe ($f_1$) und der innerhalb der Trennmittel (15) angebrachten Turbine (23) in den ersten Raum ($V_1$) der ersten Kammer (11) mündet.

3. Vorrichtung nach Anspruch 1, **dadurch gekennzeichnet, daß** der Antriebsmotor der Pumpe derart gesteuert wird, daß die Filterelemente (3) der ersten Reihe ($f_1$), die über den ersten Raum ($V_1$) beaufschlagt werden, den Hinleitungskreis bilden, während die Filterelemente (3) der zweiten Reihe ($f_2$), die in den zweiten Raum ($V_2$) münden, den Rückleitungskreis bilden, und daß der Einlaß (E) für das zu behandelnde Fluid zwischen dem Ausgang der Filterelemente (3) der zweiten Reihe ($f_2$) und der innerhalb der Trennmittel (15) angebrachten Turbine (23) in den außerhalb der Trennmittel (15) begrenzten zweiten Raum ($V_2$) der ersten Kammer mündet.

4. Vorrichtung nach Anspruch 1 oder 2, **dadurch gekennzeichnet, daß** der Einlaß (600) für das zu behandelnde Fluid ein röhrenförmiges Element (30) umfaßt, derart, daß er innerhalb der Trennmittel (15) ausmündet.

5. Vorrichtung nach Anspruch 1 oder 3, **dadurch ge-**

**kennzeichnet, daß** der Einlaß (600) für das zu behandelnde Fluid einen röhrenförmigen Anschlußstutzen (31) umfaßt, derart, daß er außerhalb der Trennmittel (15) ausmündet.

6. Vorrichtung nach einem der Ansprüche 1, 2 oder 4, **dadurch gekennzeichnet, daß** die Sonde (800A) sich im Bereich des zweiten Raums ($V_2$), entlang der Zirkulationsrichtung des Fluids, nach der Turbine (23) und vor dem Einlaß der den Hinleitungskreis bildenden Filterelemente der zweiten Reihe ($f_2$) befindet.

7. Vorrichtung nach Anspruch 1, 3 oder 5, **dadurch gekennzeichnet, daß** die Sonde (800B) sich im Bereich des zweiten Raums ($V_2$) entlang der Zirkulationsrichtung des Fluids vor der Turbine (23) befindet.

8. Vorrichtung nach einem der Ansprüche 1 bis 7, **dadurch gekennzeichnet, daß** sie Mittel zum Vergleichen der erfaßten Information mit einem Schwellenwert umfaßt, die ermöglichen, die Risiken eines Gelierens der zu filternden Flüssigkeit innerhalb des Filterelements oder der Filterelemente und/oder die Risiken eines vollständigen Zusetzens des Filterelements oder der Filterelemente zu bewerten.

9. Vorrichtung nach Anspruch 8, **dadurch gekennzeichnet, daß** sie Mittel zum Auslösen eines Sicherheitsverfahrens in Abhängigkeit von den Ergebnissen des Vergleichs umfaßt.

10. Vorrichtung nach einem der Ansprüche 1 bis 9, **dadurch gekennzeichnet, daß** die Sonde eine von der Konzentration, der Viskosität, der volumenbezogenen Masse und/oder von der Zirkulationsgeschwindigkeit des zu filternden Fluids abhängige Information erfaßt.

11. Vorrichtung nach einem der Ansprüche 1 bis 10, **dadurch gekennzeichnet, daß** die Sonde eine von der volumenbezogenen Masse des zu behandelnden Fluids abhängige Information erfaßt.

12. Vorrichtung nach einem der Ansprüche 1 bis 10, **dadurch gekennzeichnet, daß** die Sonde eine von der Zirkulationsgeschwindigkeit des zu behandelnden Fluids abhängige Information erfaßt.

13. Vorrichtung nach einem der Ansprüche 1 bis 12, **dadurch gekennzeichnet, daß** die Sonde eine mittels einer an dem Retentat durchgeführten Messung erhaltene Information liefert.

14. Vorrichtung nach einem der Ansprüche 1 bis 12, **dadurch gekennzeichnet, daß** die Sonde eine mittels einer an dem zu filternden Fluid durchgeführten Messung erhaltene Information liefert.

**15.** Vorrichtung nach einem der Ansprüche 1 bis 14, **dadurch gekennzeichnet, daß** die Sonde eine Ultraschallsonde ist.

FIG.1A

FIG.1B

FIG.2

FIG.3A

FIG.3B

FIG.3C

FIG.4

FIG.5

**FIG.6**

**FIG.7**

## RÉFÉRENCES CITÉES DANS LA DESCRIPTION

**Documents brevets cités dans la description**

- FR 2810256
- WO 0196003 A
- US 6161435 A
- WO 2004067146 A
- JP 04371218 A
- US 2004266017 A